# EUROPEAN PATENT APPLICATION

(11) **EP 4 465 107 A1**
(43) Date of publication of application: **20.11.2024**
(21) Application number: 23173474.0
(22) Date of filing: 15.05.2023
(51) Int. Cl.: G02B 21/00, G01N 21/64, G02B 21/32

(54) **METHODS AND SYSTEMS FOR PROCESSING DATA OF A CONFOCAL LOCALIZATION MICROSCOPE**

(71) Applicant: LUMICKS DSM Holding B.V., 1105 AG Amsterdam (NL)
(72) Inventor: Hulleman, Christiaan Nick, 1105 AG Amsterdam (NL)
(74) Representative: De Vries & Metman

(57) **Abstract**

Method and system for processing data of a confocal localization microscope are described, wherein the method comprises: moving a laser beam, preferably multiple times, over a sample according to a predetermined trajectory , the sample comprising at least one fluorescent centre, the wavelength of the laser being selected to excite the at least one fluorescent centre; detecting single photons emitted by the at least one fluorescent centre, each detection of a single photon defining a detection event; associating a time instance to the detection events to define time-tagged detection events; determining a continuous distribution of detection events as a function of the position on the sample based on time-tagged detection events and the predetermined trajectory of the moving laser beam; and, determining a position of the fluorescent centre in relation to the sample based on the continuous distribution of detection events.

## Description

### Technical field

The disclosure relates to processing data of a confocal localization microscope, and in particular, though not exclusively, to methods and systems for processing data of a confocal localization microscope.

### Background

Localization microscopy has become an established method to localize the position of individual emitters with camera-based fluorescence microscopes. These systems inherently produce images that are pixelated and where the data in each pixel is essentially acquired at the same time (sCMOS cameras are read out line per line so not strictly at the same time). The basic principle of localization microscopy is to have only a single fluorescent emitter on at any one time within a diffraction limited region, the position is then determined by fitting a Point Spread Function (PSF) model (or a Gaussian approximation thereof) to the pixelated data. Many different localization methods have been developed but the golden standard in localization microscopy is using maximum likelihood estimation (MLE) as it generally produces an unbiased estimate with a precision close to the Cramér-Rao lower bound (the theoretical precision limit of an unbiased estimator).

WO2014/196854 describes confocal localization microscopy systems and schemes for imaging fluorescent sites in a DNA string held by optical tweezers. A confocal scanner sweeps a laser bundle back and forth over the sample. The focused laser spot will excite any fluorescent molecules that are within the focused region of the excitation laser. The fluorescent molecule can be excited to a higher energy state and spontaneously emits fluorescence and transitions back to the ground state. The microscope includes an optical system which is configured so that only the fluorescence emission propagates to a detection system.

Although these localization microcopy schemes allow precise localization of a single fluorescent site, a disadvantage relates to the fact that measurement schemes are configured to generate pixelated and discrete data (typically many photons per pixel, where a pixel corresponds to a large unit of space) resulting in a discrete probability distribution function. Using this discrete probability distribution function for determining an accurate position of a single fluorescent molecule may result in fitting errors. Additionally, traditional localization data analysis is sensitive to blinking and bleaching of fluorophores (the temporary or permanent lack of fluorescence emission from a fluorophore) as observable in confocal data. All these effects result in reduction of the localization accuracy and precision of the microscope. Hence, from the above it follows that there is a need in the art for improved methods and systems for laser scanning localization microscopy.

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but is not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FPGAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments in this disclosure relate to a method for processing data of a confocal localization microscope comprising: moving a laser beam, preferably multiple times, over a sample according to a predetermined trajectory , the sample comprising at least one fluorescent centre, the wavelength of the laser being selected to excite the at least one fluorescent centre; detecting single photons emitted by the at least one fluorescent centre, each detection of a single photon defining a detection event; associating a time instance to the detection events to define time-tagged detection events; determining a continuous distribution of detection events as a function of the position on the sample based on time-tagged detection events and the predetermined trajectory of the moving laser beam; and, determining a position of the fluorescent centre in relation to the sample based on the continuous distribution of detection events.

Hence, time-tagged single photons are detected so that instead of acquiring pixelated and clustered photon counts (typically many photons per -100 nm pixel) a distribution of photons in space is acquired (typically no more than 1 count, with a high-rate of 1 pm - 0.1 nm per sample), which can be fitted with a continuous probability distribution function rather than a discrete probability distribution function which would be used for pixelated data. Fitting it in this way and avoiding pixelation (binning) of the photons, yields an improvement in accuracy and / or precision compared to conventional schemes. The use of single photons also avoids false clusters in the localization data which can be present when using data obtained by a pixelated detector. This is especially apparent at lower photon counts, which is a common use case because typically fast dynamic movement monitoring is desired which typically require the exposure time and consequently the photon counts to be reduced.

In an embodiment, the determining of a continuous distribution of detection events may be performed without binning of the time-tagged detection events into pixelated data or before binning the time-tagged detection events into pixelated data.

In an embodiment, the laser beam may be controlled to move along a known trajectory (including linearly with a constant velocity) over the sample. In an embodiment, the sampling density may be uniform over the entire sample, preferably at least locally uniform around a fluorescent center.

In an embodiment, the method may further include: determining if one or more parts of the time-tagged detection events are associated with bleaching or blinking of the fluorescent centre; and, the determining of the position of the fluorescent centre including: neglecting or weighting detection events associated with bleaching or blinking of the fluorescent centre. It is well known that in fluorescence microscopy blinking and bleaching of fluorophores (the temporary or permanent lack of (or reduction in) fluorescence emission from a fluorophore) is a problem. If a fluorophore blinks during a confocal scan, then the data along the time axis allows the identification of a period of no (or reduced) fluorescence emission. By omitting this non (or reduced) fluorescent section along the spatial axis we can avoid bias that would otherwise be induced as the lack of photons would shift the Gaussian fit away from the real position.

In an embodiment, the method may include fitting the distribution of detection events to a function, the parameters of the fitting function determining the position of at least one fluorescent centre.

In an embodiment, the sample may be a macromolecule or biomolecule. Macromolecules or biomolecules as used herein includes but is not limited to, a protein, a polypeptide, a peptide, a DNA molecule, an RNA molecule, a lipid, a polysaccharide, a microtubule, an actin filament, an amyloid fibril, and any combination thereof. The macromolecule or biomolecule may be aligned to essentially become a one-dimensional sample.

In an embodiment, the sample is a single one-dimensional macromolecule or biomolecule arranged along the moving direction of the laser beam.

In an embodiment, a first microsphere may be connected to a first end of the sample and a second microsphere may be connected to the second end of the sample, the first and second microspheres being trapped in a first and second optical trap respectively.

In an embodiment, the method may comprise: controlling the position of first and/or second optical trap and/or controlling the laser beam scanning axis to co-align the one-dimensional sample with the predetermined optical trajectory for optimal data acquisition.

In a further aspect, the embodiments may relate to a confocal localization microscope comprising a laser system configured to control a laser beam, preferably multiple times, over a sample, the sample comprising at least one fluorescent centre, the wavelength of the laser being selected to excite the at least one fluorescent centre; a single photon detector system configured to detect during the scanning of the sample by the laser beam single photons emitted by the at least one fluorescent centre, each detection of a single photon defining a detection event; a time tagger configured to determining time instances associated with the detection events; and, a data acquisition module configured to determine a distribution of detection events as a function of the position of the laser beam based on the time instances and the velocity of the moving laser beam.

In an embodiment, the microscope may further comprise: an optical trapping laser system for trapping and manipulating beads; preferably at least one optical trap being configured to construct a one-dimensional sample; and/or, the optical trapping region in the sample overlapping at least partially with the confocal microscope scanning region.

In yet a further aspect, the embodiments may relate to a module for controlling a confocal localization microscope, the module being configured for: controlling a laser beam, preferably multiple times, over a sample according to a predetermined trajectory , the sample comprising at least one fluorescent centre, the wavelength of the laser being selected to excite the at least one fluorescent centre; controlling a detector to detect single photons emitted by the at least one fluorescent centre, each detection of a single photon defining a detection event; associating a time instance to the detection events to define time-tagged detection events; determining a continuous distribution of detection events as a function of the position on the sample based on time-tagged detection events and the predetermined trajectory of the moving laser beam; and, determining a position of the fluorescent centre in relation to the sample based on the continuous distribution of detection events.

In an embodiment, the module may be configured for: controlling an optical trapping module for linearly arranging a macromolecule or biomolecule, preferably for orienting a linear macromolecule or biomolecule along the confocal scanning axis; and/or, controlling the confocal scanning axis to align to the linear orientation of the macromolecule or biomolecule.

The embodiments may also relate to a computer program or suite of computer programs comprising at least one software code portion the software code portion, when run on a computer, being configured for executing the method steps as described above.

### Brief Description of the drawings

**Fig. 1A** depicts a schematic of a confocal localization microscope according to an embodiment;
**Fig. 1B** depicts typical kymograph data in a conventional pixelated data representation.
**Fig. 2A** and **2B** depicts conventional processing of confocal localization data
**Fig. 3A** and **3B** depict processing of confocal localization data according to an embodiment;
**Fig. 4** depicts a method for processing confocal localization data according to an embodiment;
**Fig. 5** depicts processing of confocal localization data according to another embodiment;
**Fig. 6** depicts processed confocal localization data according to an embodiment and conventionally processed confocal localization data;
**Fig. 7** depicts conventional processing of confocal localization data and processing confocal localization data according to an embodiment;
**Fig. 8** is a block diagram illustrating exemplary data processing systems described in this disclosure.

### Description of the embodiments

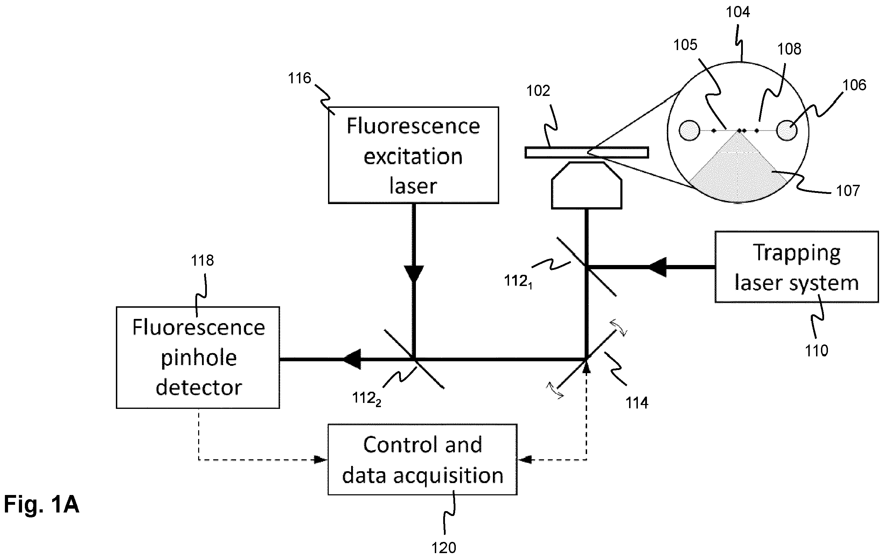

**Fig 1A** schematically illustrates a laser scanning localization microscopy system for imaging fluorescent parts of a sample. The system may include a sample holder **102** (e.g. a channel or a microscope slide), **104** depicts a magnified view inside the sample holder. The sample holder may contain or support a sample **105** e.g. a single macromolecule or a large biomolecule such as proteins or nucleic acids. The sample may be supported on the surface of a glass slide or (as illustrated) tethered between two microspheres **106** which may be held by optical tweezers/traps. The microspheres can be optically trapped and manipulated by controlling the trapping laser beams of a trapping laser system **110** configured to focus two trapping beams (not shown) into the sample holder. The manipulation of the sample (by optical tweezers/traps or sample preparation) may allow for the macromolecule to be in a (stretched) linear position. In particular, the position of the microspheres may be controlled by trapping laser beams so that the sample forms a one dimensional (1D) linear macromolecule. The optical trapping and manipulation system may be combined by dichroic mirrors **112,** with a system that may further include a scanning microscope which is configured to control **120** a scanning beam of a fluorescence excitation laser **116.** The confocal scanner **114** is configured to sweep the scanning beam back and forth over the sample according to a predetermined trajectory.

The focused laser spot **107** may excite any fluorescent molecules **108** that are within the focused region of the excitation laser. The fluorescent molecule can be excited to a higher energy state and can spontaneously emit fluorescence and transition back to the ground state. The wavelength of fluorescence emission is red-shifted to longer wavelengths due to the loss of energy. With a wavelength sensitive dichroic mirror **112₂** the excitation light can be blocked and only the fluorescence emission propagates to the detection system. A spatial filter (e.g. a pinhole) may be used to ensure that light from the focal plane hits the detector but light from different planes (in front or behind the focal plane) is suppressed.

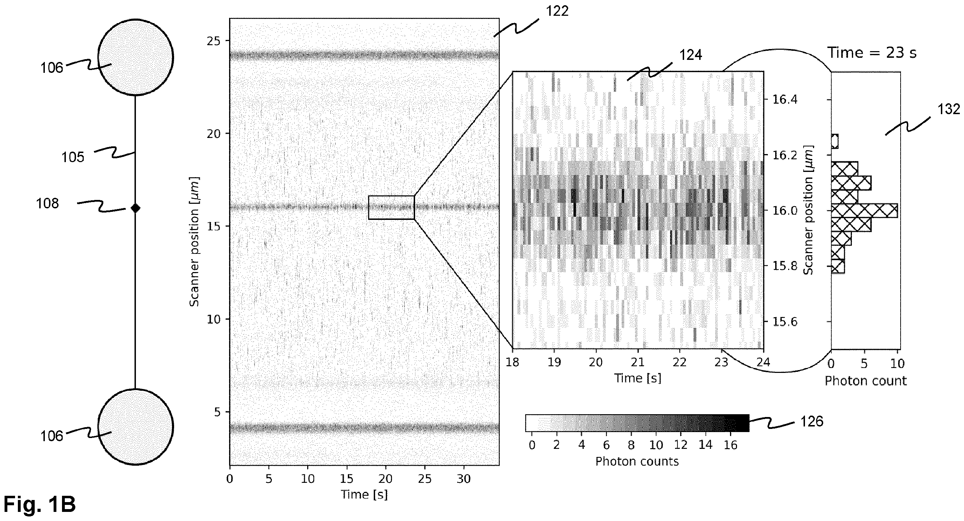

In conventional scanning localization microscopy systems as e.g. described in WO2014/196854, the detection system is configured to count the number of photons that arrive per pixel and therefore individual photon counts are typically clustered, i.e. binned, with typically at least a few photons per pixel (for the pixels corresponding to an emitter, background pixels may sometimes have only one count or less). When scanning back and forth over a substantially one-dimensional sample, the data of interest is reduced to one spatial dimension and one time dimension. The resulting data is referred to as a kymograph. An example of a kymograph **122** is depicted in **Fig. 1B****,** which is the result of scanning a one-dimensional sample (in this case a lambda DNA molecule) **105** located between two beads **106** held in optical traps. The data of the kymograph show fluorescent emission of one localized fluorescent center **108** as a function of time (in this case a Cas9 molecule bound to target DNA). The inset **124** illustrates an image of an enlarged section around the position of the fluorescent center **108.** The data clearly show pixelated data points with varying intensities (different amounts of detected photons according to color scale **126)** as a function of space (vertical) and time (horizontal). Zooming in onto a single kymograph line **132** it is clear that the data is shown in a pixelated representation as this remains useful to visualize the raw data as an image **(122** and **124).**

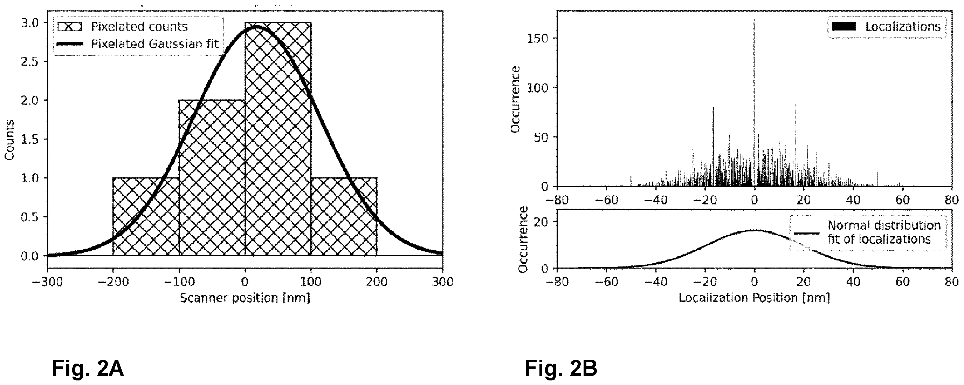

Processing the data using a conventional scanning system that generates pixelated data as illustrated in **Fig. 1B****,** where there are a few pixels per diffraction limited spot, may lead to false localization clusters, especially at low photon counts. At low photon counts there are only a very limited number of ways the photons can be distributed between the pixels. Each unique distribution will lead to one specific localized position, however as there are only a few possible distributions with low photon counts they will appear clustered. **Fig. 2A** depicts a graph of a sample distribution obtained by a conventional scanning localization microscope using localization based on a pixelated data representation. The graph depicts the number of photon-counts per pixel as a function of position along the scanning line (with zero being the position of the fluorescent molecule) and a Gaussian fit based on the photon count distribution.

For a sample distribution with only 7 detected photons typically there are no more than 3 photons per pixel and the other pixels only take values of 0, 1 or 2 photons. This means that, in practice, there are only a few limited combinations of photon distributions that can occur with 7 photons. If some of the photons around the zero position arrive slightly shifted (away from the zero position) but do not transition from one pixel to the next, exactly the same pixelated distribution will be obtained which in turn will result in the exact same localized position. This leads to false clusters in the localized position with pixelated fitting at low photon counts.

In a simulation such a process can be accurately repeated many times, still using 100 nm per pixel and a more common 30 photons (Poisson distribution so 30+-(~5) photons) with each iteration fitted with a Gaussian MLE. Combining 5000 individually simulated sample distributions and their corresponding localized position a clustering of the localized positions can be observed, as shown in **Fig. 2B****.** In this case there is a clear peak at *x* = 0 which is much larger than the overall normal distribution of all localizations. Right next to this peak there is a large gap in localizations, followed by more peaks and gaps. This non-Gaussian distribution of localizations is an artifact of the pixelated data representation used as input for the localization procedure as described above. This can lead to false conclusions about the underlying biological structure as this is an artefact of fitting and not an underlying biological periodicity. By inferring the location of the emitter (fluorescent center) from the data in the time domain (or a continuous spatial domain) instead of the pixelated spatial domain, several advantages can be realized as described with reference to the embodiments in this disclosure. The pixelated data representation may still be useful for visualization of raw data as an image.

To address problems associated with the pixelated data, the scanning localization microscopy system of **Fig. 1A** includes a detection system **120** comprising a high time-resolution photon detector **118** with single photon sensitivity. In an embodiment, the time resolution of the single photon detector is in the range of between 0.1 nanoseconds and 10 microseconds, preferably between 0.1 and 100 nanoseconds. The detection system **120** may further include a high-resolution clock for time-tagging photon detection events. This way, every photon (unit of light) is recorded precisely in time. Because a clear relationship exists between time and the position of the scanning excitation spot (which may be linear), every time-tagged (time stamped) photon detection event can be directly related to a position. Thus, in contrast to conventional localization on confocal systems, which use a pixelated data representation with pixelated and clustered photon counts (typically many photons per large unit of space), the scanning localization microscopy system of **Fig. 1** will measure a continuous distribution of photons as a function of beam positions, with never more than a single photon count per very small unit of space and use these time-tagged data to accurately determine a position of a fluorescent center on e.g. a DNA molecule. Thereafter the time-tagged data may be binned to determine pixels of an image, such as a kymograph. Thus, based on the high time resolution of the confocal system and a predetermined position of the laser beam at every point in time, time-tagged photons can be linked to a position on a continuous axis. In turn these time-tagged localized photon counts are processed by a fitting algorithm to accurately estimate a position, even for low photon events. This way, when measuring a sample distribution, the horizontal axis is (pseudo) continuous and no longer discretized due to the pixels.

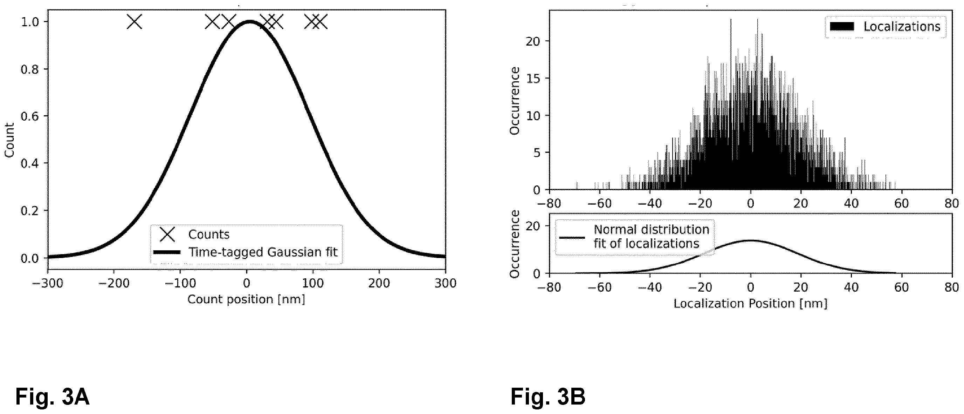

**Fig. 3A** depicts a sample distribution acquired by the scanning localization microscopy system according to an embodiment. The crosses depict the positions (time) at which a photon event was detected. This distribution of photons may be fitted with a true continuous probability distribution function rather than a discrete probability distribution function which would be used for pixelated data. In an embodiment, a maximum likelihood estimation (MLE) algorithm may be used when fitting the data. In this case it is extremely unlikely to get the exact same distribution of photons (distance from one detected photon to the next) if the experiment is repeated. Therefore, there are no false localization clusters when processing the data in this way.

Fitting the acquired data this way without (or at least before) pixelation (binning) of the photons, yields an improvement in precision that is in line with the theory of how localization precision scales with pixel size (for example for 2D camera images see Mortensen et al, Optimized localization analysis for single-molecule tracking and super-resolution microscopy, Nature Methods 7, 377, 377-381 (2010)). As shown by **Fig. 3B****,** the distribution of localized positions nicely matches a normal distribution without any false clusters or peaks. The processing, in particular fitting, of confocal data based a continuous distribution of time-tagged (non-pixelated) data generates localizations of a fluorescent center with a normal distribution and without false clusters and "gaps" in the measured data due to blinking and bleaching. Such accurate localization of a fluorescent center in a large molecule, such as a DNA molecule, is necessary to make sound conclusions about the underlying biological features, revealing a periodicity or structure that may otherwise be masked by false clustering in the localization data.

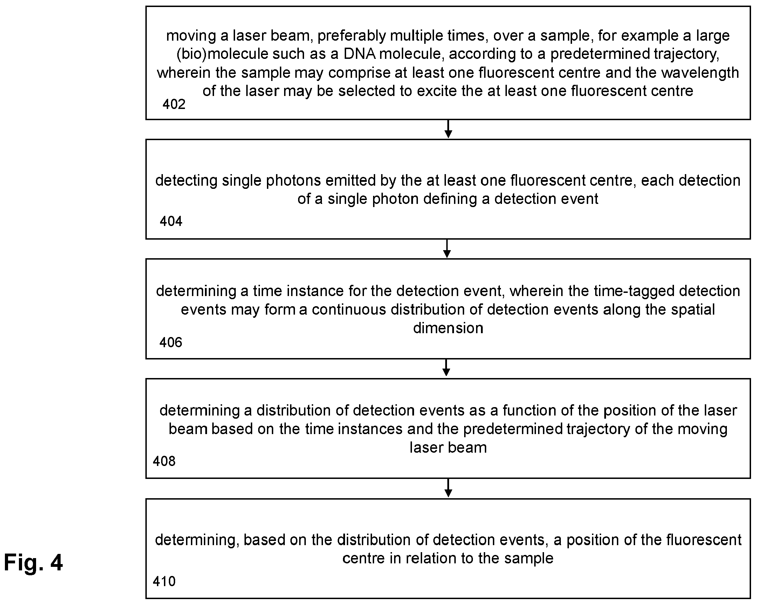

**Fig. 4** depicts a method for processing data of a confocal localization microscope according to an embodiment. The method may include moving a laser beam, preferably multiple times, over a sample, for example a large (bio)molecule such as a DNA molecule, according to a predetermined trajectory, wherein the sample may comprise at least one fluorescent centre. Further, the wavelength of the laser may be selected to excite the at least one fluorescent centre (step **402**). The method may further include the step of detecting single photons emitted by the at least one fluorescent centre, each detection of a single photon defining a detection event (step **404**) and determining a time instance for the detection event (step **406**), wherein the time-tagged detection events may form a continuous distribution of detection events along the spatial dimension. Further, the method may include determining a distribution of detection events as a function of the position of the laser beam based on the time instances and the predetermined trajectory of the moving laser beam (step **408**); and, determining, based on the distribution of detection events, a position of the fluorescent centre in relation to the sample (step **410**). In an embodiment (not shown), before determination of the position, one or more detection events with no or low fluorescent emission may be determined and removed from the distribution of detection events.

Besides the improvements in localization precision, the scanning localization microscopy schemes based on a continuous distribution of time-tagged localization data provide two major advantages compared to the conventional scanning localization microscopy schemes. Firstly, false clusters in the localization data can be eliminated. This is especially apparent at lower photon counts, which is an important use case because often it is desired to follow fast dynamic movements which typically require the exposure time and consequently the photon counts to be reduced. Secondly, it is well known that in fluorescence microscopy blinking and bleaching of fluorophores (the temporary or permanent lack of fluorescence emission from a fluorophore) is an issue. If a fluorophore blinks during a confocal scan, then the data along the time (or spatial) axis may include a "gap", i.e. a period of no (or reduced) fluorescent emission. By omitting this non (or reduced) fluorescent section along the axis, bias can be avoided that would otherwise be induced as the lack of photons would shift the fit (e.g. a PSF fit or Gaussian approximation thereof) away from the real position.

Generally, the intertwining of the spatial axis and time axis in confocal data can lead to a lot of issues when trying to localize fluorescent molecules that are not perfectly stable in their fluorescent state transitions. In conventional camera-based fluorescent microscopes this is not an issue because if a fluorophore is in an off-state it affects all the pixels equally. In this way the expected distribution of photons on the camera is always equal to a pixelated PSF. For confocal data obtained using a scanning localization microscopy system, each pixel is acquired at a different point in time. This implies that if a fluorophore was in an off-state during the acquisition of one of the pixels then the detected photon density no longer matches the PSF and a bias in the localized position is expected. The treatment of the spatial and time axis in the confocal system according to the embodiments described in this application offers a remedy to avoid this problem. From the time signal, regions of low photon emission can be detected compared to the surrounding signal acquired before and after this region. The signal that has low photon emission can be omitted from the localization procedure to avoid biases in the localized position. In case where these dark states are identified and omitted from the fitting procedure the detected photon distribution may again become equal to the PSF.

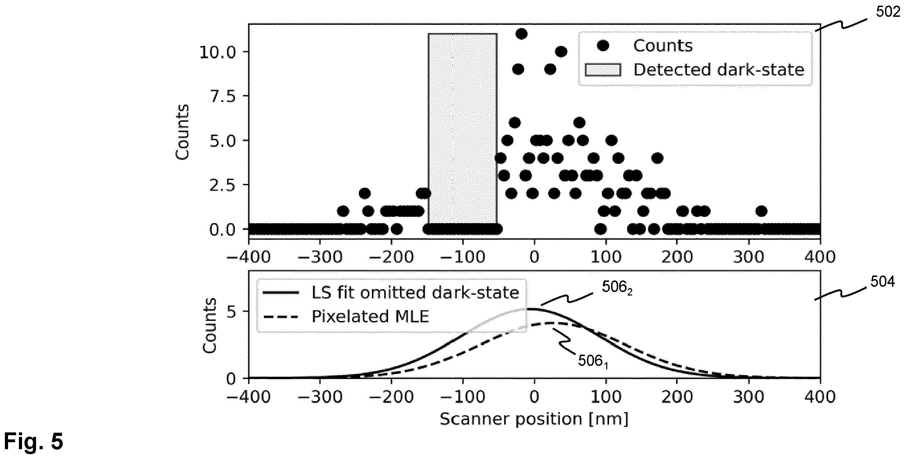

**Fig. 5** depicts sample distributions obtained from a blinking fluorophore. In particular, the figure includes a graph **502** of the measured timed tagged data and a graph **504** comprising a first fit **506,** which is not corrected for blinking and a second fit **506₂** which is corrected for blinking effects. If a fluorophore is known to be positioned at 0 nm and there was no fluorescence emission between -150 nm and -50 nm then this would lead to a bias with standard localization procedures. Fitting the data based on a conventional pixelated scheme (e.g. a pixelated MLE in the plot), a fit **506,** with a localized position is determined which is shifted to the right (25.9 nm) because the region of no fluorescence on the left part of the graph shifts the center of mass towards the right.

To correct for blinking effects, it is assumed that within the central region of the PSF, photon detection events are expected. If the region of the PSF includes one or more "extended" regions in which photons are expected but not detected then these regions are assumed to relate to blinking and should be omitted when determining a location based on the fitting of the time-tagged data.

To that end, a Gaussian fit may be performed on all data and extended regions (i.e. regions of a predetermined size) of less than expected fluorescence are identified. Identification of such regions may be based on the ratio between the actual data and the fit. If this ratio is low (e.g. below a certain threshold) over a region of a predetermined size then it is likely that the low fluorescent region can be attributed to blinking and thus can be identified as an off-state region. By omitting these regions from a subsequent PSF fit (for example a Gaussian Least Squares LS or MLE), an improved localized position may be determined.

Based on the above, the data of graph **502** are processed, including the steps of fitting the data around an emitter (Gaussian LS in this case), divide the data by the fit (regions of lower than expected fluorescence have a low value), classify the regions of low fluorescence if the above ratio is lower than a threshold; count how long each detected region of low fluorescence is; and, determine any dark-region longer than 8 samples within the central region of the PSF (approx. 30 samples) and convert these dark-regions to NAN (at least 40 nm region within approx. 150 nm). This way, a position may be determined (-5.6 nm) based on a fit **502₂** which is five times closer to the ground truth (0 nm) for this particular scan.

In an embodiment, to identify the regions of low fluorescence, extended regions of no (or below expected) detected photons within the central region of the PSF may be identified. In an embodiment, the detection of the position and central region may be performed using a peak finding algorithm and a center of mass calculation. A further next step would be to include sensor noise and background light and set a dark-state detection limit that is a few times higher than the average dark counts and background light on the detectors. By checking the local average photon counts compared to the background level, regions where the fluorophore is non fluorescent can be detected. Alternatively, in another embodiment, a Gaussian fit may be performed taking all datapoints into account, from this any region that is significantly less bright than expected and has an off-time duration that matches the expected (typically) exponentially distributed off-times can be neglected in a following off-state corrected fit.

In an embodiment, to distinguish which section is in an on-state and which is in an off-state a hidden Markov-chain model may be used. Such model allows a classification of every part of the data and assesses whether it is in one of two (or more) states, for example either in the on-state emitting fluorescence or in an off-state where no fluorescence is emitted, or optionally in other states of reduced fluorescence intensity. Such model accounts for both the probability of emission and the rate of state transitions, so that a statistical assessment can be made of which state the fluorophore is in and the switching rates it has.

An example of photo-switching state characterization is described in the article by Patel et al, A hidden Markov model approach to characterizing the photo-switching behavior of fluorophores, Ann. Appl. Stat. 13(3): 1397-1429 (September 2019) DOI: 10.1214/19-AOAS1240. In the embodiments described in this application however the spatial photon distribution (PSF) is also taken into account as the data generated by the laser scanning localization microscopy system are a convolution of both the PSF and fluorescence emission rate as a function of time. In that case, simply monitoring and classifying the fluorescence emission as a function of time is not sufficient.

After identifying which section is in an on-state or off-state, with any of the methods mentioned above, the off-state regions are omitted from the fitting procedure and only datapoints in the fluorescent on-state are taken into account. In an embodiment, data associated with an off-state may be processed based on a binary scheme by omitting datapoints. In another embodiment, data associated with an off-state may be performed based on a weighting function so that the influence of these data can be taken into account in a more continuous and gradual manner. Omitting these regions is essentially saying that it is not clear what happened in this region (photons may or may not have arrived if the molecule remained fluorescent), which is the key step in avoiding the bias induced by the region of non-fluorescence. In this way the best solution can be found by using only the viable data regions and assume nothing about the non-viable regions. The data itself indicates that no photons were detected in this location but from the time-domain data one can determine that it was more likely that the fluorophore was temporarily non-fluorescent rather than the PSF having an uncharacteristic region of non-fluorescence.

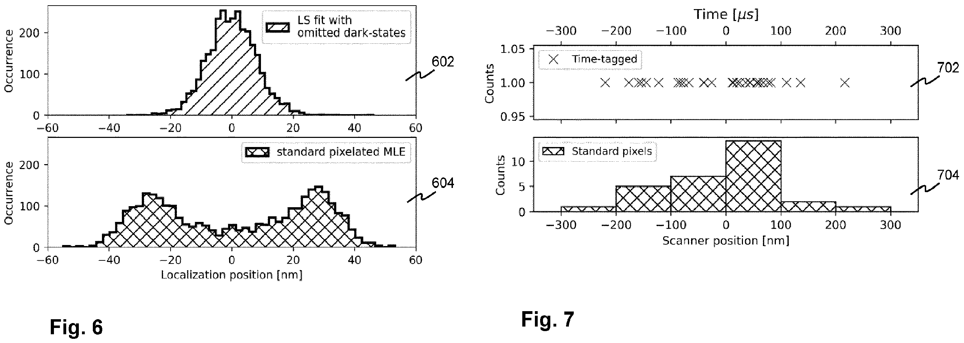

In this scheme of omitting off-states, different fitting algorithms such as a Least-Squares LS algorithm or a an MLE algorithm may be used. **Fig. 6** depicts a comparison of a sample distribution obtained based on the time-tagging and dark-state omission scheme **602** as described with reference to the embodiments in this disclosure, and a sample distribution obtained based on a conventional pixelated scheme **604.** The ground truth position (simulated at 0 nm) is evidently more accurately retrieved in **602** with a normal distribution surrounding 0 nm. These graphs show that localization is significantly improved, in this particular case with a randomly distributed off-state with a spatial duration of 100 nm the localized position is approximately 3 times more accurate. By identifying periods of no fluorescence emission in the time signal and omitting them in the spatial domain, bias in the localized position can be avoided in confocal localizations. This improves the quality of confocal localization data, in particular in biological samples where proper fluorophore stabilizing buffers are incompatible.

The advantages associated with the embodiments in this application including time-tagged acquisition of the scanning data and, optionally, omitting regions of no fluorescence, are especially present when performing 1D scanning of a sample, for example scanning schemes and systems as described with reference to **Fig. 1A** and **1B** wherein a series of kymographs are produced wherein each kymograph represents a photon distribution as a function of position and time.

The advantages are to a lesser extent also present when using the embodiments for performing 2D confocal imaging. The scanning speed and spacing along the second dimension is slower and larger meaning that the data is inherently pixelated. A scan of a single fluorophore will typically span numerous scan lines and the photon flux stability will be different for every scan line. This implies that the advantage of omitting dark-states is reduced as this error is already slightly averaged out over the multiple scan lines. Nevertheless, the accuracy of localizations will always be improved by accounting for the temporary dark-states in fluorescent emission in confocal images.

**Fig. 7** provides an overview of the different modes of data acquisitions for a confocal localization microscope. The first inset **702** shows a data acquisition based on the time-tagging scheme as described with reference to the embodiments in this application. This scheme requires a high time-resolution single photon detection system. These data are directly fit to obtain an accurate localization of a fluorescent emitter, optionally, taking into account the effect of blinking. Thereafter, detected photons can be binned into large pixels (typically -100 nm) or acquired at a slow rate, as generally done to generate confocal images for display purposes as shown by graph **704.** In this common mode of confocal data acquisition, the localization precision and accuracy will be less because of the concepts described above.

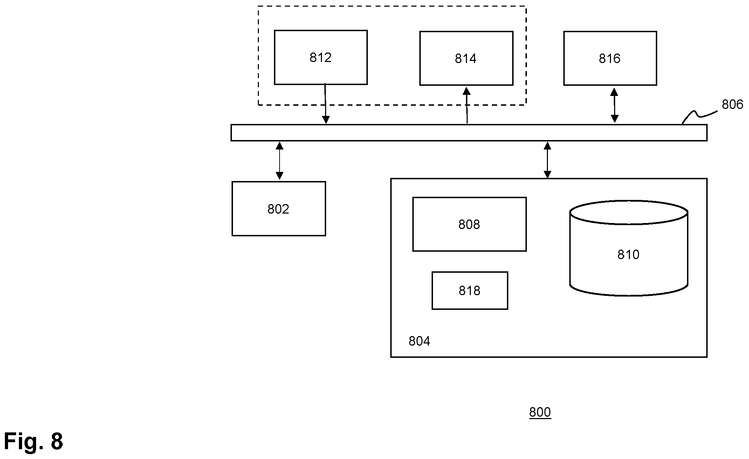

**Fig. 8** is a block diagram illustrating exemplary data processing systems described in this disclosure. Data processing system **800** may include at least one processor **802** coupled to memory elements **804** through a system bus **806.** As such, the data processing system may store program code within memory elements **804.** Further, processor **802** may execute the program code accessed from memory elements **804** via system bus **806.** In one aspect, data processing system may be implemented as a computer that is suitable for storing and/or executing program code. It should be appreciated, however, that data processing system **800** may be implemented in the form of any system including a processor and memory that is capable of performing the functions described within this specification.

Memory elements **804** may include one or more physical memory devices such as, for example, local memory **808** and one or more bulk storage devices **810.** Local memory may refer to random access memory or other non-persistent memory device(s) generally used during actual execution of the program code. A bulk storage device may be implemented as a hard drive or other persistent data storage device. The processing system **800** may also include one or more cache memories (not shown) that provide temporary storage of at least some program code in order to reduce the number of times program code must be retrieved from bulk storage device **810** during execution.

Input/output (I/O) devices depicted as key device **812** and output device **814** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **816** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with data processing system **800.**

As pictured in **Fig. 8****,** memory elements **804** may store an application **818.** It should be appreciated that data processing system **800** may further execute an operating system (not shown) that can facilitate execution of the application. Application, being implemented in the form of executable program code, can be executed by data processing system **800,** e.g., by processor **802.** Responsive to executing application, data processing system may be configured to perform one or more operations to be described herein in further detail.

In one aspect, for example, data processing system **800** may represent a client data processing system. In that case, application **818** may represent a client application that, when executed, configures data processing system **800** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **918,** when executed, may configure data processing system to perform (HTTP) server operations. In another aspect, data processing system may represent a module, unit or function as referred to in this specification.

The terminology used herein is for the purpose of describing particular embodiments only and is not intended to be limiting. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments .

## Claims

1. Method for processing data of a confocal localization microscope comprising:
moving a laser beam, preferably multiple times, over a sample according to a predetermined trajectory , the sample comprising at least one fluorescent centre, the wavelength of the laser being selected to excite the at least one fluorescent centre;
detecting single photons emitted by the at least one fluorescent centre, each detection of a single photon defining a detection event;
associating a time instance to the detection events to define time-tagged detection events;
determining a continuous distribution of detection events as a function of the position on the sample based on time-tagged detection events and the predetermined trajectory of the moving laser beam; and,
determining a position of the fluorescent centre in relation to the sample based on the continuous distribution of detection events.

2. Method according to claim 1 wherein the determining a continuous distribution of detection events is performed without binning of the time-tagged detection events into pixelated data or before binning the time-tagged detection events into pixelated data.

3. Method according to claims 1 and 2 wherein the laser beam is moving linearly with a constant velocity over the sample and/or wherein the sampling density is (substantially) uniform.

4. Method according to any of claims 1-3 further including:
determining if one or more parts of the time-tagged detection events are associated with bleaching or blinking of the fluorescent centre; and,
the determining of the position of the fluorescent centre including:
neglecting or weighting (the absence of) detection events associated with bleaching or blinking of the fluorescent centre.

5. Method according to any of claims 1-4 wherein the sample is a macromolecule or biomolecule, preferably the macromolecule or biomolecule being aligned to form a one-dimensional sample.

6. Method according to any of claims 1-6 wherein the method further includes:
fitting the distribution of detection events to a function, preferably based on a maximum likelihood estimation algorithm, the centre of the fitting function determining the position of the least one fluorescent centre.

7. Method according to any of claims 1-6 wherein the sample is a single one-dimensional macromolecule or biomolecule arranged along the moving direction of the laser beam.

8. Method according to any of claims 1-7 wherein a first microsphere is connected to a first end of the sample and a second microsphere is connected to the second end of the sample, the first and second microsphere being trapped in a first and second optical trap respectively.

9. Method according to claim 8 further comprising:
controlling the position of first and/or second optical trap and/or controlling the laser beam scanning axis to co-align the one-dimensional sample with the predetermined optical trajectory for optimal data acquisition.

10. A confocal localization microscope comprising
a laser system configured to control a laser beam, preferably multiple times, over a sample, the sample comprising at least one fluorescent centre, the wavelength of the laser being selected to excite the at least one fluorescent centre;
a single photon detector system configured to detect during the scanning of the sample by the laser beam single photons emitted by the at least one fluorescent centre, each detection of a single photon defining a detection event;
a time tagger configured to determining time instances associated with the detection events; and,
a data acquisition module configured to determine distribution of detection events as a function of the position of the laser beam based on the time instances and the velocity of the moving laser beam.

11. A confocal localization microscope according to claim 10 further comprising:
an optical trapping laser system for trapping and manipulating beads; preferably at least one optical trap being configured to construct a one-dimensional sample; and/or, the optical trapping region in the sample overlapping at least partially with the confocal microscope region.

12. A module for controlling a confocal localization microscope, the module being configured for:
controlling a laser beam, preferably multiple times, over a sample according to a predetermined trajectory , the sample comprising at least one fluorescent centre, the wavelength of the laser being selected to excite the at least one fluorescent centre;
controlling a detector to detect single photons emitted by the at least one fluorescent centre, each detection of a single photon defining a detection event;
associating a time instance to the detection events to define time-tagged detection events;
determining a continuous distribution of detection events as a function of the position on the sample based on time-tagged detection events and the predetermined trajectory of the moving laser beam; and, determining a position of the fluorescent centre in relation to the sample based on the continuous distribution of detection events.

13. A module according to claim 12 further being configured for:
controlling an optical trapping module for linearly arranging a macromolecule or biomolecule, preferably for orienting a linear macromolecule or biomolecule along the confocal scanning axis; and/or,
controlling the confocal scanning axis to align to the linear orientation of the macromolecule or biomolecule.

14. A computer program or suite of computer programs comprising at least one software code portion the software code portion, when run on a computer, being configured for executing the method steps according any of claims 1-9, or part thereof.
